Europäisches Patentamt

European Patent Office

Office européen des brevets

(19)

(11) Numéro de publication : **0 349 376 B1**

(12) **FASCICULE DE BREVET EUROPEEN**

(45) Date de publication du fascicule du brevet :
06.05.92 Bulletin 92/19

(51) Int. Cl.⁵ : **H02G 3/04, H02G 3/26**

(21) Numéro de dépôt : **89401708.6**

(22) Date de dépôt : **16.06.89**

(54) **Guide-câble.**

(30) Priorité : **28.06.88 FR 8808669**

(43) Date de publication de la demande :
**03.01.90 Bulletin 90/01**

(45) Mention de la délivrance du brevet :
**06.05.92 Bulletin 92/19**

(84) Etats contractants désignés :
**AT BE DE ES GB GR IT NL SE**

(56) Documents cités :
**CH-A- 473 495
CH-A- 492 323
CH-A- 585 473**

(73) Titulaire : **LEGRAND
128 Avenue du Maréchal de Lattre de
Tassigny
F-87045 Limoges Cédex (FR)**

(72) Inventeur : **Buard, Yvon
Le Pont Voutre
F-53600 Evron (FR)**

(74) Mandataire : **CABINET BONNET-THIRION
95 Boulevard Beaumarchais
F-75003 Paris (FR)**

## Description

La présente invention concerne d'une manière générale les guide-câble, c'est-à-dire les baguettes utilisées pour le maintien, contre une paroi, d'au moins un câble, tel que câble électrique ou téléphonique.

Elle vise plus particulièrement le cas où ce guide-câble comporte, sous forme de profilé, une semelle, par laquelle il peut être appliqué au support à équiper, deux ailes latérales élastiquement déformables définissant, au-dessus de ladite semelle, un logement propre à recevoir le câble à fixer audit support, et, entre ladite semelle et ledit logement, une cloison interne, qui définit avec ladite semelle un double fond.

Un tel guide-câble se trouve notamment décrit dans le brevet français qui, déposé sous le No 76 15949, a été publié sous le numéro FR-A-2 344 990.

Ainsi qu'il est aisé de le comprendre, par son moment d'inertie, qui est relativement élevé, le double fond que présente ainsi un tel guide-câble confère avantageusement à celui-ci une certaine rigidité, lui évitant, notamment, de se vriller, au bénéfice de sa tenue et de son apparence.

Mais se pose alors le problème de la fixation d'un tel guide-câble, lorsque cette fixation doit se faire à l'aide de moyens de fixation ponctuels, tels que clous, vis ou agrafes.

Sans autre, la tête de tels moyens de fixation porte normalement sur la face supérieure de la cloison interne, en faisant inévitablement saillie sur celle-ci.

Outre que, en raison d'un probable fléchissement local de cette cloison interne, l'emprise de ces moyens de fixation avec le support à équiper se trouve alors plus ou moins incertaine, la saillie que font leurs têtes sur cette cloison interne est de nature à induire sur le câble, au détriment de l'apparence de l'ensemble, la formation, en "vagues", d'ondulations, ce câble devant contourner localement chacune de ces têtes.

Sans doute pour pallier ces inconvénients, il a été envisagé, dans le brevet français No 76 15949 mentionné ci-dessus, de percer la cloison interne, ou paroi supérieure, du guide-câble, d'une série de trous propres à permettre l'introduction des moyens de fixation nécessaires, la tête de ceux-ci venant alors porter non plus sur cette paroi supérieure mais sur la semelle, ou paroi inférieure, de ce guide-câble.

Il est clair que le percement de tels trous n'est guère compatible avec la réalisation sous forme de profilé du guide-câble concerné.

La présente invention a d'une manière générale pour objet une disposition permettant de surmonter cette difficulté.

De manière plus précise, elle a pour objet un guide-câble du genre comportant, sous forme de profilé, une semelle, par laquelle il peut être appliqué à un quelconque support, deux ailes latérales élastiquement déformables définissant, au-dessus de ladite semelle, un logement propre à recevoir, par exemple à l'unité, un câble à fixer audit support, et, entre ladite semelle et ledit logement, une cloison interne, qui définit avec ladite semelle un double fond, et qui est percée de manière à permettre l'introduction des moyens de fixation, vis ou clous, nécessaires à la fixation de ladite semelle audit support, ce guide-câble étant d'une manière générale caractérisé en ce que, pour l'introduction desdits moyens de fixation, la cloison interne est ouverte longitudinalement par une fente continue dans sa zone médiane, en sorte qu'elle se réduit à deux nervures s'étendant chacune respectivement en saillie sur la face interne des deux ailes latérales.

La mise en oeuvre d'une telle fente continue est, a priori, antinomique avec la recherche d'une bonne rigidité, concrétisée, elle, par la mise en oeuvre d'un double fond.

Mais, en pratique, l'expérience montre, de manière assez surprenante, que, malgré cette fente, un raidissement suffisant est assuré par les nervures subsistantes.

Il résulte, en outre, avantageusement, de cette fente, un abaissement du centre de rotation des ailes latérales lors de leur déformation élastique, ce centre de rotation ne se situant plus au niveau de la cloison interne du guide-câble, mais au niveau de sa semelle.

La capacité de déformation élastique de ces ailes latérales s'en trouve sensiblement augmentée, ce qui permet avantageusement l'adaptation du guide-câble à des câbles de diamètres différents.

Les caractéristiques et avantages de l'invention ressortiront d'ailleurs de la description qui va suivre, à titre d'exemple, en référence aux dessins schématiques annexés sur lesquels :

la figure 1 est une vue d'un guide-câble suivant l'invention ;

la figure 2 en est une vue en coupe transversale, pour un premier mode de fixation de ce guide-câble ;

la figure 3 est une vue en coupe transversale analogue à celle de la figure 2, pour un deuxième mode de fixation du guide-câble suivant l'invention.

Tel qu'illustré sur ces figures, il s'agit, globalement, d'assurer le maintien, contre une paroi, ou, d'une manière plus générale, un quelconque support 10, d'un quelconque câble 11.

Le guide-câble 12 mis en oeuvre à cet effet comporte, sous forme de profilé, une semelle 13, par laquelle il peut être appliqué au support 10 ainsi à équiper, deux ailes latérales élastiquement déformables 14 définissant, au-dessus de ladite semelle 13, un logement 15 propre à recevoir, en pratique à l'unité, le câble 11 à fixer audit support 10, et, entre ladite semelle 13 et ledit logement 15, une cloison interne 16, qui définit avec ladite semelle 13 un double fond 17, et qui, suivant des modalités décrites plus en détail ultérieurement, est percée de manière à permettre l'introduction des moyens de fixation, par exemple des vis 18, ou des clous, nécessaires à la fixation de cette semelle 13 audit support 10.

Dans la forme de réalisation représentée, les ailes latérales 14 s'étendent sensiblement perpendiculairement à la semelle 13, et, au voisinage de leur bord libre, elles convergent légèrement, de manière arrondie, en direction l'une de l'autre.

Suivant l'invention, pour l'introduction des moyens de fixation, en l'espèce les vis 18, nécessaires à la fixation de la semelle 13, la cloison interne 16 est, dans sa zone médiane, et sur toute sa longueur, ouverte longitudinalement par une fente continue 20, en sorte qu'elle se réduit à deux nervures 19, qui s'étendent chacune respectivement en saillie sur la face interne des deux ailes latérales 14.

Dans la forme de réalisation représentée, ces nervures 19 s'étendent en direction l'une de l'autre, sensiblement perpendiculairement aux ailes latérales 14.

Mais elles peuvent tout aussi bien être plus ou moins obliques par rapport à la semelle 13.

Par exemple, leur largeur, qui est sensiblement la même pour l'une et l'autre d'entre elles, est inférieure au tiers de la distance séparant, intérieurement, l'une de l'autre, les ailes latérales 14, tandis que la largeur de la fente 20 est, elle, supérieure, au tiers de cette distance.

La largeur de la fente 20 est en tout cas faite suffisante pour permettre un passage, éventuellement à force, de la tête des vis 18.

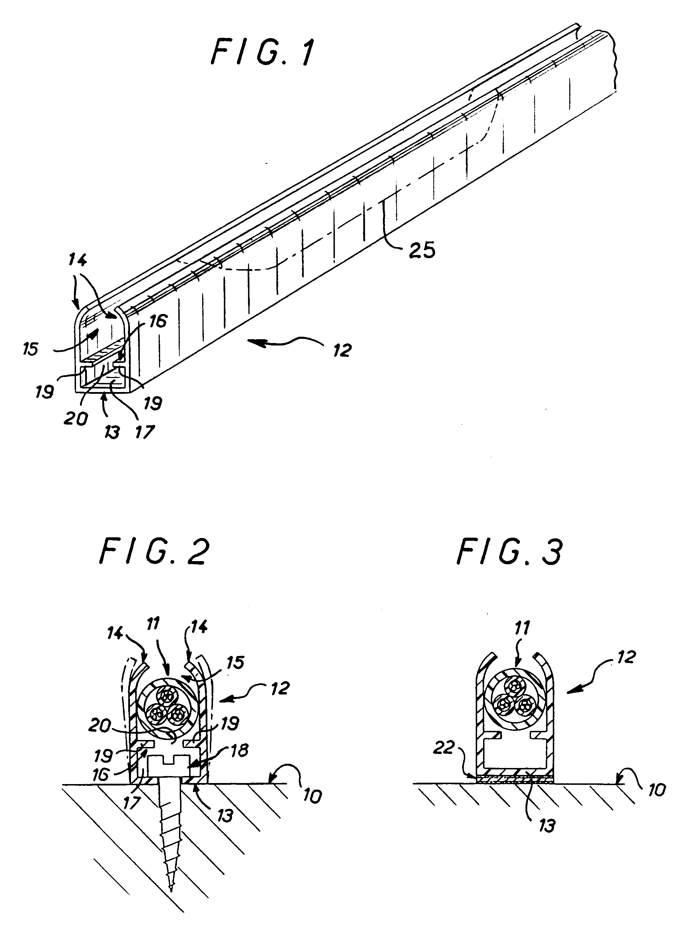

Tel que schématisé en traits interrompus à la figure 2, les ailes latérales 14 peuvent s'écarter élastiquement l'une de l'autre pour le passage du câble 11 à mettre en place dans le logement 15 qu'elles définissent, tout en étant convenablement rigidifiées par les nervures 19 formant la cloison interne 16.

Lors de cette déformation élastique, le centre de rotation des ailes latérales 14 est matérialisé par leur raccordement à la semelle 13.

Une fois le câble 11 en place dans le logement 15 qu'elles définissent, les ailes latérales 14 reprennent élastiquement leur configuration initiale, ou, suivant le diamètre de ce câble 11, tendent au moins à reprendre cette configuration initiale.

Quoi qu'il en soit, le câble 11 est alors maintenu à l'écart de la tête des vis 18 par la cloison interne 16.

Bien entendu, la mise en oeuvre de telles vis 18 n'est d'ailleurs pas indispensable.

Tel que représenté à la figure 3, la fixation au support 10 du guide-câble 12 suivant l'invention peut tout aussi bien se faire par collage, à l'aide, par exemple, d'un adhésif double face 22 intervenant entre sa semelle 13 et ce support 10.

La présente invention ne se limite d'ailleurs pas à la forme de réalisation et de mise en oeuvre décrite et représentée, mais englobe toute variante d'exécution, telle que revendiquée dans les revendications.

En particulier, et tel que schématisé en traits interrompus à la figure 1, le guide-câble suivant l'invention peut présenter, de place en place, à la manière de ce qui est connu en soi dans certaines goulottes ou autres conduits de ce type, des échancrures 25, sur l'une et/ou l'autre de ses ailes latérales, par exemple en correspondance de l'une à l'autre de celles-ci, ce qui peut faciliter l'intervention de l'outil éventuellement mis en oeuvre pour la pose des vis, pointes ou agrafes propres à sa fixation, lorsque cette fixation se fait à l'aide de telles vis, pointes ou agrafes, et/ou ce qui peut faciliter une éventuelle sortie latérale du câble concerné.

Dans la forme de réalisation schématisée à la figure 1 en trait mixte, ces échancrures 25 sont allongées.

En outre, la matière constitutive du guide-câble suivant l'invention est indifférente.

Il peut s'agir par exemple d'une matière synthétique, et, plus précisément, d'une matière synthétique transparente.

Enfin, on ne sortirait pas du cadre de la présente invention si le logement que comporte le guide-câble en cause était suffisant pour accueillir plus d'un câble.

## Revendications

1. Guide-câble du genre comportant, sous forme de profilé, une semelle (13), par laquelle il peut être appliqué à un quelconque support (10), deux ailes latérales élastiquement déformables (14) définissant, au-dessus de ladite semelle (13), un logement (15) propre à recevoir, par exemple à l'unité, un câble (11) à fixer audit support (10), et, entre ladite semelle (13) et ledit logement (15), une cloison interne (16), qui définit avec ladite semelle (13) un double fond (17), et qui est percée de manière à permettre l'introduction des moyens de fixation, vis (18) ou clous par exemple, nécessaires à la fixation de cette semelle (13) audit support (10), caractérisé en ce que, pour l'introduction desdits moyens de fixation, la cloison interne (16) est ouverte longitudinalement par une fente continue (20) dans sa zone médiane, en sorte qu'elle se réduit à deux nervures (19) s'étendant chacune respectivement en saillie sur la face interne des deux ailes latérales (14).

2. Guide-câble suivant la revendication 1, caractérisé en ce qu'il présente, de place en place sur l'une au moins de ses ailes latérales 14, des échancrures (25).

## Patentansprüche

1. Kabelführung der Art, die in Form eines Profils eine Sohle (13), durch die sie auf einem Träger (10) angebracht werden kann, zwei elastisch verformbare seitliche Schenkel (14), die oberhalb der Sohle (13) eine Aufnahme (15) definieren, die geeignet ist, beispielsweise als Einheit, ein auf dem Träger (10) zu befestigendes Kabel (11) aufzunehmen, und zwischen der Sohle (13) und der Aufnahme (15) eine innere Trennwand (16) aufweist, die mit der Sohle (13) einen doppelten Boden (17) definiert, und die so durchbrochen ist, daß sie das Einführen von Befestigungsmitteln, beispielsweise Schrauben (18) oder Nägeln, erlaubt, die zur Befestigung der Sohle (13) am Träger (10) erforderlich sind, dadurch gekennzeichnet, daß zum Einführen der Befestigungsmittel die innere Trennwand (16) in ihrer Mittelzone in Längsrichtung durch einen durchgehenden Schlitz (20) geöffnet ist, so daß sie sich auf zwei Rippen (19) reduziert, die von den Innenseiten der beiden seitlichen Schenkel (14) abstehen.

2. Kabelführung nach Anspruch 1, dadurch gekennzeichnet, daß sie an mindestens einem ihrer seitlichen Schenkel (14) stellenweise Einkerbungen (25) aufweist.

## Claims

1. A cable-guide of the type comprising in the form of an iron section, a sole (13), by means of which may be applied to any support (10), two lateral wings elastically twistable (14) defining above the said sole (13), a housing (15) capable of receiving, for example per unit, a cable (11) to be secured to the said support (10), and, between the said sole (13) and the said housing (15), an inner partition (16), which defines together with the said sole (13) a false bottom (17), and which is drilled so as to allow the introduction of securing means, screws (18) or nails for example, necessary for securing this sole (13) to the said support (10), characterised in that for the introduction of the said securing means, the inner partition (16) is opened longitudinally by a continuous slit (20) in its median zone, so that it is reduced to two ribs (19) each extending respectively as a protuberance on the inner face of the two lateral wings (14).

2. A cable-guide according to claim 1, characterised in that it presents , from place to place over at least one of its lateral wings 14, notches (25).

## FIG. 1

## FIG. 2

## FIG. 3